(19) Europäisches Patentamt

European Patent Office

Office européen des brevets

(11) Numéro de publication: **0 272 242 B1**

(12) **FASCICULE DE BREVET EUROPEEN**

(45) Date de publication de fascicule du brevet: **18.03.92**

(21) Numéro de dépôt: **87870187.9**

(22) Date de dépôt: **18.12.87**

(51) Int. Cl.⁵: **C04B 2/02**, C21C 5/36, B09B 1/00, B09B 3/00, B09B 5/00, C05D 3/02, C22B 1/244, C02F 1/66, B01D 53/34

(54) **Produit aggloméré, sa fabrication et son utilisation.**

(30) Priorité: **19.12.86 BE 217573**

(43) Date de publication de la demande:
**22.06.88 Bulletin 88/25**

(45) Mention de la délivrance du brevet:
**18.03.92 Bulletin 92/12**

(84) Etats contractants désignés:
**AT BE CH DE ES FR GB GR IT LI LU NL SE**

(56) Documents cités:
**DE-A- 3 334 118**
**FR-A- 2 227 328**
**FR-A- 2 329 751**
**FR-A- 2 421 947**

**JAPANESE PATENT GAZETTE, Section CH, semaine 8551, 5 fevrier 1986, Derwent Publications LTD, London, GB; & JP-A-60 221 383 (NIPPON SEKKAI KOGYO) 06-11-1985**

(73) Titulaire: **LHOIST RECHERCHE ET DEVELOP-PEMENT S.A.**
**Rue Charles Dubois, 28**
**B-1342 Ottignies-Louvain-La-Neuve(BE)**

(72) Inventeur: **Jourdain, Eric**
**Rue du Renil, 32**
**B-5830 Mazy(BE)**

(74) Mandataire: **Vanderperre, Robert et al**
**Bureau Vander Haeghen S.A. Rue Colonel Bourg 108 A**
**B-1040 Bruxelles(BE)**

## Description

La présente invention est relative à un produit aggloméré contenant des particules d'oxyde de calcium et/ou d,oxyde de magnésium.

Les termes "produit aggloméré", tels qu'ils sont utilisés dans le présent mémoire, désignent des produits de forme et de dimension quelconques, tels que des boulets, briquettes, boudins, etc...

On sait que la calcination des pierres calcaires ou dolomitiques effectuée à l'échelle industrielle dans des fours, tels que des fours rotatifs, produit des quantités appréciables atteignant parfois 20 - 30 % de fines particules dont la granulométrie est inférieure à environ 7 mm.

Il est connu d'agglomérer ces fines particules par compactage pour former des produits agglomérés. Ce compactage peut s'effectuer par compression des fines particules entre deux rouleaux présentant des alvéoles.

Les produits agglomérés par ce procédé connu ont l'inconvénient d'être peu résistants aux chocs et ainsi d'avoir tendance à reformer des fines particules au cours de leur manutention ou de leur transport.

Par ailleurs, les produits agglomérés par ce procédé connu ont une résilience inférieure à celle des produits sous forme de roches, quelle que soit la pression exercée lors du compactage et quelle que soit la densité de ces produits agglomérés.

La présente invention vise à remédier à ces inconvénients.

Elle a pour objet un produit aggloméré du type décrit dans le premier paragraphe du présent mémoire, ce produit aggloméré étant essentiellement caractérisé en ce qu'il contient environ 0,5 à 10 %, de préférence 1 à 3 %, en poids de fibres cellulosiques à titre de liant.

Dans une forme de réalisation, le produit aggloméré présente une densité comprise entre 1,5 et 2,5.

Selon une particularité du produit suivant l'invention, les fibres cellulosiques sont des fibres de papier ou de carton, des fibres de bois, de la sciure de bois, de la paille, des fibres à base de dérivés de la cellulose ou d'autres fibres ligneuses.

Selon une autre particularité du produit suivant l'invention, les particules susdites ont une granulométrie inférieure à environ 7 mm et les fibres ont une longueur inférieure à environ 10 millimètres et, de préférence, supérieure à la granulométrie des particules.

La présente invention a également pour objet un procédé d'obtention du produit aggloméré suivant l'invention.

Ce procédé est essentiellement caractérisé en ce qu'on mélange des particules d'oxyde de calcium et éventuellement d'oxyde de magnésium des fibres cellulosiques de manière à obtenir un mélange contenant environ 0,5 à 10 % en poids de fibres cellulosiques et on comprime des fractions du mélange obtenu.

La présente invention a encore pour objet l'utilisation du produit aggloméré pour l'affinage d'acier dans un convertisseur, pour l'épuration de fluides tels que des gaz , pour le traitement de déchets tels que des immondices urbains par épandage du produit suivant l'invention sur ces déchets ou pour le chaulage de terres agricoles.

D'autres particularités et détails du produit aggloméré, de son procédé de fabrication et de son utilisation ressortiront de la description détaillée suivante:

On a fabriqué des produits agglomérés contenant des particules de chaux (CaO) et/ou de dolomie décarbonatée (CaO.MgO). Ces particules (CaO et CaO.MgO) peuvent être des particules fines provenant de fours de calcination de pierres calcaires ($CaCO_3$) ou dolomitiques ($CaCO_3$ $MgCO_3$). Ces fines particules ont, en général, une granulométrie inférieure à 7 millimètres.

Les produits agglomérés suivant l'invention ont été préparés de la manière suivante:

On a mélangé des particules de chaux vive (granulométrie moyenne 1 mm) avec des fibres cellulosiques à raison de 3 % en poids dans un mélangeur ou malaxeur à vis sans fin. Les fibres cellulosiques ont été préparées en broyant dans un broyeur à disques des déchets de papier, tels que des feuilles de papier de journaux ou des vieux cartons. Ces fibres avaient une longueur d'environ 2 à 4 mm et ont été directement introduites sous forme de petits flocons dans le mélangeur après broyage.

On a ensuite comprimé le mélange sec de particules de chaux vive (oxyde de calcium) et de fibres cellulosiques entre deux rouleaux présentant des alvéoles de manière à former des agrégats ou briquettes de forme sensiblement parallélipipédique de 30 × 20 × 15 millimètres. La pression exercée sur le mélange entre les deux rouleaux était d'environ 10 tonnes par centimètre linéaire des rouleaux.

La densité de chacune des briquettes obtenues était de 1,99, alors que 1 kg de particules fines de départ (granulométrie inférieure à 7 mm) occupait un volume d'environ 1 litre.

Ces briquettes ont été testées pour mesurer leur résilience, c'est-à-dire la résistance aux chocs des briquettes ou encore leur aptitude à ne pas former des fines particules sous l'effet de chocs.

Ce test consiste à précipiter à quatre reprises une charge de 25 kg de produits agglomérés d'une

EP 0 272 242 B1

hauteur de deux mètres sur une surface dure. La quantité de produits agglomérés de granulométrie supérieure à 10 millimètres exprimée en % par rapport à la quantité initiale de ces produits est une mesure de leur résilience.

D'autres produits agglomérés ont été préparés et testés de manière identique à celle décrite plus haut. Ces produits contenaient respectivement 0, 1, 2 et 3 % en poids de fibres cellulosiques et de la chaux vive ou de la dolomie décarbonatée.

Les résultats des tests de ces produits sont repris dans le tableau suivant:

| produit à base de | % en poids de fibres cellulosiques | résilience* |
|---|---|---|
| chaux vive en roche provenant directement du four de calcination de pierres calcaires | 0 | 90 |
| Chaux vive sous forme de produit aggloméré | 0<br>1<br>2<br>3 | 84,2<br>90,3<br>93,4<br>96,2 |
| dolomie décarbonatée en roche provenant directement du four de calcination de pierres dolomitiques | 0 | 91 |
| dolomie décarbonatée sous forme de produit aggloméré | 0<br>1<br>2<br>3 | 83,1<br>92,8<br>94,5<br>97,0 |

* fraction en % de particules de granulométrie supérieure à 10 mm après 4 chutes d'une hauteur de 2 m.

Ce tableau montre clairement que l'addition de très faibles quantités (environ 1 % en poids) de fibres cellulosiques permet l'obtention de produits agglomérés présentant une résilience identique voire supérieure à celle de chaux vive et/ou de dolomie décarbonatée provenant directement de fours de calcination de pierres calcaires ou dolomitiques.

Ce tableau montre également que l'addition de quantités légèrement supérieures à 1 % en poids de fibres cellulosiques permet l'obtention de produits agglomérés présentant des résiliences nettement supérieures à celles de chaux vive et/ou dolomie décarbonatée sous forme de roche provenant des fours de calcination.

Ces essais ont également montré que l'utilisation de fibres cellulosiques à raison de moins de 0,5 % en poids n'apportait qu'une faible amélioration de la résilience et que l'utilisation de fibres à raison de plus de 10 % en poids ne permet pas d'accroître significativement la résilience des produits agglomérés.

Divers procédés industriels d'obtention de produits agglomérés suivant l'invention autres que le procédé utilisé pour la préparation des échantillons utilisés dans les tests décrits plus haut sont possibles.

Ainsi on peut former une bandelette ou galette continue de chaux vive et de fibres cellulosiques en déposant un mélange sec de chaux et de fibres cellulosiques sur une bande transporteuse et en comprimant ce mélange en le forçant à passer entre des rouleaux. On découpe ensuite cette bandelette en agrégats de particules.

Comme fibres celulosiques, on peut également utiliser des fibres provenant de plantes telles que conifères, bois feuillus, pailles, sciures.

Ces produits agglomérés présentent de nombreux avantages lorsqu'ils sont utilisés pour l'affinage d'acier dans un convertisseur, pour l'épuration de fluides, tels que liquides ou gaz, contenant des constituants acides, pour l'épandage de chaux vive ou de dolomie décarbonatée sur des déchets ou immondices, tels que des déchets urbains ou pour le chaulage de terres agricoles.

Parmi ces avantages, on peut citer les suivants:
- l'amélioration des conditions de transport c'est-à-dire la facilité de manutention de ces produits agglomérés par rapport à celle de particules fines ;
- la diminution de pertes par envolements de fines particules grâce à la très bonne résilience des produits agglomérés ;
- l'élimination du problème d'empoussiérage par dépôt de fines particules dans des ateliers ou usines et du problème de pollution de l'atmosphère de ceux-ci par des fines particules ;

- la facilité de l'échantillonnage grâce au fait que le produit aggloméré est obtenu à partir d'un mélange sensiblement homogène et grâce à l'élimination du phénomène de ségrégation apparaissant lors du stockage de fines particules ;
- la facilité et la régularité de l'alimentation par exemple de réacteurs ou de convertisseurs ;
- une meilleure réactivité ainsi qu'une meilleure conduite des réactions ;
- la récupération de fines particules de chaux ou dolomie décarbonatée qui ne présentaient pas d'intérêt pour l'aciérie.

Les essais suivants ont été réalisés pour montrer la meilleure réactivité des produits agglomérés suivant l'invention vis-à-vis de produits agglomérés connus similaires, mais ne contenant pas de liant fibreux.

Essai n° 1 : réactivité de la chaux vive

On a mesuré la réactivité de la chaux selon la norme belge NBN B13-204 ou DIN 1060. Selon cette norme, on mélange une partie en poids de chaux vive avec 4 parties d'eau à 20° C et on mesure l'élévation de température du mélange, celle-ci dépendant de la vitesse d'extinction de la chaux, c'est-à-dire de sa réactivité.

Pour effectuer ces essais, on a utilisé de la chaux vive sous forme de produit aggloméré ayant une granulométrie inférieure à 3 millimètres. Les résultats de cet essai pour un produit aggloméré ne contenant pas de fibres et pour un produit aggloméré contenant 2 % de fibres de papier sont repris dans le tableau suivant :

| | produit aggloméré | |
| --- | --- | --- |
| | sans fibres | avec fibres |
| temps nécessaire pour que le mélange atteigne une température de 60° C (secondes). | 135 | 95 |

Essais n° 2 : réactivité de la dolomie décarbonatée.

On a mesuré la réactivité de la dolomie décarbonatée selon la norme ASTM C110. Selon cette norme, on mélange 120 g de dolomie décarbonatée avec 400 g d'eau à 40° C et on mesure le temps nécessaire pour que le mélange atteigne la température de 70° C. La dolomie décarbonatée sous forme de produit aggloméré a été concassée en particules d'une granulométrie comprise entre 0 et 3,35 millimètres comme le préconise cette norme ASTM C110.

La tableau suivant donne le temps nécessaire pour atteindre une température de 70°C pour un mélange d'eau et de dolomie décarbonatée sous forme de produit aggloméré sans fibre et avec 2 % en poids de fibres de papier.

| | dolomie décarbonatée agglomérée | |
| --- | --- | --- |
| | sans fibres | avec fibres |
| temps (secondes) | 200 | 80 |

Ces essais montrent que, de façon inattendue pour l'homme du métier, la réactivité de produits agglomérés de chaux vive et de dolomie décarbonatée est augmentée respectivement de 30 % et de 60 % lorsque ces produits agglomérés contiennent également 2 % de fibres de papier.

Ces essais ou tests de réactivité tels que décrits ci-avant sont couramment effectués dans les aciéries, car on a remarqué l'existence d'un parallélisme entre les mesures de réactivité de chaux vive et de dolomie décarbonatée dans l'eau et les mesures de réactivité ou vitesse de dissolution de chaux vive et de dolomie décarbonatée dans des scories en fusion.

On a également étudié le comportement des produits agglomérés ou briquettes de chaux vive avec ou sans fibres de papier dans un four a moufle à une température de 1400° C, cette température correspondant à la température règnant dans des convertisseurs d'aciéries.

On a ainsi remarqué que les produits agglomérés contenant 2 % de fibres de papier se désagrégaient rapidement alors que les produits agglomérés ne contenant pas de fibres ne subissaient qu'une faible désagrégation. Cette désagrégation rapide semble être due à la combustion du papier, cette dernière étant par ailleurs bénéfique, grâce à son exothermicité, au maintien de la température de la scorie dans un convertisseur.

Cette réactivité importante de la chaux vive et dolomie décarbonatée agglomérée contenant des fibres de papier permet d'améliorer l'épuration de fluides, tels que des gaz, contenant des constituants acides, le traitement de déchets ou immondices, tels que des déchets urbains, par épandange de chaux vive et/ou de dolomie décarbonatée sur ceux-ci et le chaulage de terres agricoles.

De plus, on a remarqué que les produits agglomérés suivant l'invention qui peuvent être obtenus par incorporation de papier broyé à de la chaux, présentent une plasticité remarquable par rapport aux produits agglomérés ne contenant pas de fibres cellulosiques.

Cette élasticité permet aux produits suivant l'invention de rebondir légèrement lorsqu'ils sont précipités sur une surface dure, ce qui signifie que l'énergie cinétique acquise par les produits lors de cette précipitation est incapable de disloquer les produits lorsqu'ils heurtent cette surface dure.

Le tableau suivant donne une valeur de la densité apparente, du pourcentage de pores et de la résilience pour de la chaux sous forme de pierres provenant d'un four de calcination de pierres calcaires, sous forme de produits agglomérés sans fibres cellulosiques et sous forme de produits agglomérés armés de fibres cellulosiques suivant l'invention.

| pierre ou roche de chaux vive provenant d'un four de calcination de pierres calcaires | chaux vive produit aggloméré | |
| --- | --- | --- |
| | sans fibres | suivant l'invention avec 3 % de fibres |
| densité apparente d'un bloc 1,57 | 2,3 | 1,9 |
| % de pores 53 | 31 | 43 |
| résilience en % 90 | 84,2 | 96,2 |

Ce tableau montre clairement qu'il est possible d'obtenir un produit aggloméré dense présentant une résilience meilleure que celle des pierres provenant d'un four de calcination. Ce résultat est surprenant puisqu'il était connu que des produits agglomérés sans fibres étaient plus denses, mais présentaient une résilience moindre par rapport aux pierres provenant d'un four de calcination.

Enfin, lors de la fabrication de produits agglomérés au moyen de rouleaux présentant des alvéoles, on a remarqué que l'addition de fibres de papier à de la chaux vive et à de la dolomie décarbonatée permet d'accroître la productivité de l'opération de compactage.

**Revendications**

1. Produit aggloméré contenant des particules d'oxyde de calcium et éventuellement d'oxyde de magnésium, caractérisé en ce qu'il contient également environ 0,5 à 10 % en poids de fibres cellulosiques à titre de liant.

2. Produit aggloméré suivant la revendication 1, caractérisé en ce qu'il contient de 1 à 3 % en poids de fibres cellulosiques.

3. Produit aggloméré suivant l'une quelconque des revendications 1 et 2, caractérisé en ce qu'il présente une densité comprise entre 1,5 et 2,5.

4. Produit aggloméré suivant l'une quelconque des revendications précédentes, caractérisé en ce que les fibres cellulosiques sont des fibres de papier, de carton, de paille, de sciure de bois ou des fibres ligneuses.

5. Produit aggloméré suivant l'une quelconque des revendications précédentes, caractérisé en ce que les particules susdites ont une granulométrie inférieure à environ 7 millimètres.

6. Produit aggloméré suivant l'une quelconque des revendications précédentes, caractérisé en ce que les

EP 0 272 242 B1

fibres ont une longueur inférieure à environ 10 millimètres et, de préférence, supérieure à la granulométrie des particules.

**7.** Procédé d'obtention d'un produit aggloméré suivant l'une quelconque des revendications précédentes, caractérisé en ce qu'on mélange des particules d'oxyde de calcium et éventuellement d'oxyde de magnésium à des fibres cellulosiques de manière à obtenir un mélange sensiblement homogène contenant environ 0,5 à 10 % en poids de fibres cellulosiques et on comprime des fractions du mélange obtenu.

**8.** Procédé suivant la revendication 7, caractérisé en ce qu'on utilise 1 à 3 % en poids de fibres cellulosiques.

**9.** Procédé suivant l'une quelconque des revendications 7 et 8, caractérisé en ce qu'on comprime le mélange de particules jusqu'à une densité comprise entre 1,5 et 2,5.

**10.** Procédé suivant l'une quelconque des revendications 7 à 9, caractérisé en ce qu'on utilise des fibres de papier, de carton, de paille, de sciure de bois ou des fibres ligneuses.

**11.** Procédé suivant l'une quelconque des revendications 7 à 10, caractérisé en ce qu'on utilise des particules d'une granulométrie inférieure à 7 millimétres.

**12.** Procédé suivant l'une quelconque des revendications 7 à 11, caractérisé en ce qu'on utilise des fibres ayant une longueur inférieure à environ 10 millimètres et, de préférence, supérieure à la granulométrie des particules.

**13.** Procédé suivant l'une quelconque des revendications 7 à 12, caractérisé en ce qu'on soumet les fractions du mélange de particules et de fibres cellulosiques à une pression de 10 tonnes par centimètre linéaire.

**14.** Utilisation du produit aggloméré suivant l'une quelconque des revendications 1 à 6 pour l'affinage d'acier dans un convertisseur.

**15.** Utilisation du produit aggloméré suivant l'une quelconque des revendications 1 à 6 pour l'épuration de fluides contenant des constituants acides.

**16.** Utilisation du produit aggloméré suivant l'une quelconque des revendications 1 à 6 pour le traitement de déchets et immondices, en particulier de déchets urbains, par épandage.

**17.** Utilisation du produit aggloméré suivant l'une quelconque des revendications 1 à 6 pour le chaulage de terres agricoles.

**Claims**

**1.** Conglomerate product containing calcium oxide and possibly magnesium oxide particles, characterized in that it contains also about 0.5 to 10 % by weight fibres of cellulose as binder.

**2.** Conglomerate product according to claim 1, characterized in that it contains from 1 to 3 % by weight fibres of cellulose.

**3.** Conglomerate product according to anyone of claims 1 and 2, characterized in that it has a density comprised between 1.5 and 2.5.

**4.** Conglomerate product according to anyone of the preceding claims, characterized in that the fibres of cellulose are paper fibres, cardboard fibres, straw fibres, wood sawdust fibres or ligneous fibres.

**5.** Conglomerate product according to anyone of the preceding claims, characterized in that the size of said particles is lower to about 7 millimeters.

6

6. Conglomerate product according to anyone of the preceding claims, characterized in that the fibres have a length lower to about 10 millimeters and, preferably, greater than the particle size.

7. Process for the preparation of a conglomerate product according to anyone of the preceding claims, characterized in that calcium oxide and possibly magnesium oxide particles are mixed with fibres of cellulose so as to obtain a substantially homogeneous mixture containing about 0.5 to 10 % by weight fibres of cellulose and parts of the so obtained mixture are compressed.

8. Process according to claim 7, characterized in that from 1 to 3 % by weight fibres of cellulose are used.

9. Process according to anyone of the claims 7 and 8, characterized in that the mixture of particles is compressed up to obtaining a density comprised between 1.5 and 2.5.

10. Process according to anyone of the claims 7 to 9, characterized in that paper fibres, cardboard fibres, straw fibres, wood sawdust fibres or ligneous fibres are used.

11. Process according to anyone of the claims 7 to 10, characterized in that particles having a size lower to 7 millimeters are used.

12. Process according to anyone of the claims 7 to 11, characterized in that fibres having a length lower to about 10 millimeters and, preferably, greater than the particle size are used.

13. Process according to anyone of the claims 7 to 12, characterized in that parts of the mixture of particles and fibres of cellulose are subjected to a pressure of 10 tons per linear centimeter.

14. Use of the conglomerate product according to anyone of the claims 1 to 6, for the refining of steel in a converter.

15. Use of the conglomerate product according to anyone of the claims 1 to 6, for the purification of fluids containing acid compounds.

16. Use of the conglomerate product according to anyone of the claims 1 to 6, for the treatment of waste or refuse, in particular of garbage by spreading.

17. Use of the conglomerate product according to anyone of the claims 1 to 6, for the lime treatment of farmlands.

**Patentansprüche**

1. Preßkörper, enthaltend Calciumoxidteilchen und gegebenenfalls Magnesiumoxidteilchen, dadurch gekennzeichnet, daß er auch etwa 0,5 bis 10 Gew.% Cellulosefasern als Bindemittel enthält.

2. Preßkörper nach Anspruch 1, dadurch gekennzeichnet, daß er 1 bis 3 Gew.% Cellulosefasern enthält.

3. Preßkörper nach einem der Ansprüche 1 und 2, dadurch gekennzeichnet, daß er eine Dichte zwischen 1,5 und 2,5 aufweist.

4. Preßkörper nach einem der vorhergehenden Ansprüche, dadurch gekennzeichnet, daß die Cellulosefasern Papier-, Karton-, Stroh-, Sägespäne- oder Holzfasern sind.

5. Preßkörper nach einem der vorhergehenden Ansprüche, dadurch gekennzeichnet, daß die Teilchen eine Korngröße von unter etwa 7 mm haben.

6. Preßkörper nach einem der vorhergehenden Ansprüche, dadurch gekennzeichnet, daß die Fasern eine Länge von unter etwa 10 mm und vorzugsweise größer als die Korngröße der Teilchen haben.

7. Verfahren zur Schaffung eines Preßkörpers nach einem der vorhergehenden Ansprüche, dadurch gekennzeichnet, daß man Calciumoxidteilchen und gegebenenfalls Magnesiumoxidteilchen mit Cellulosefasern derart vermischt, daß man eine im wesentlichen homogene Mischung mit einem Gehalt von etwa 0,5 bis 10 Gew.% Cellulosefasern erhält, und man Fraktionen der erhaltenen Mischung komprimiert.

**8.** Verfahren nach Anspruch 7, dadurch gekennzeichnet, daß man 1 bis 3 Gew.% Cellulosefasern verwendet.

**9.** Verfahren nach einem der Ansprüche 7 und 8, dadurch gekennzeichnet, daß man die Teilchenmischung bis zu einer Dichte zwischen 1,5 und 2,5 komprimiert.

**10.** Verfahren nach einem der Ansprüche 7 bis 9, dadurch gekennzeichnet, daß man Papier-, Karton-, Stroh-, Sägespäne- oder Holzfasern verwendet.

**11.** Verfahren nach einem der Ansprüche 7 bis 10, dadurch gekennzeichnet, daß man Teilchen einer Korngröße von unter 7 mm verwendet.

**12.** Verfahren nach einem der Ansprüche 7 bis 11, dadurch gekennzeichnet, daß man Fasern mit einer Länge von unter etwa 10 mm und vorzugsweise größer als die Korngröße der Teilchen verwendet.

**13.** Verfahren nach einem der Ansprüche 7 bis 12, dadurch gekennzeichnet, daß man die Fraktionen der Mischung aus Teilchen und Cellulosefasern einem Druck von 10 t pro linearem cm unterzieht.

**14.** Verwendung des preßkörpers nach einem der Ansprüche 1 bis 6 zum Frischen von Stahl in einem Konverter.

**15.** Verwendung des Preßkörpers nach einem der Ansprüche 1 bis 6 zur Reinigung von Säurebestandteile enthaltenden Fluiden.

**16.** Verwendung des preßkörpers nach einem der Ansprüche 1 bis 6 zur Aufbereitung durch Bestreuen von Abfällen und Unrat, insbesondere von städtischem Müll.

**17.** Verwendung des Preßkörpers nach einem der Ansprüche 1 bis 6 zur Kalkung von landwirtschaftlichen Böden.